# EUROPEAN PATENT APPLICATION

(11) **EP 1 495 944 A1**
(43) Date of publication of application: **12.01.2005**
(21) Application number: 03720886.5
(22) Date of filing: 19.03.2003
(51) Int. Cl.: B62D 6/00, B62D 5/04, H02P 7/288

(54) **MOTOR-DRIVEN POWER STEERING APPARATUS**

(30) Priority: 10.04.2002 JP 2002107820
(71) Applicant: NSK LTD.,, Shinagawa-ku, Tokyo 141-8560 (JP)
(72) Inventor: ITAKURA, Yusuke; c/o NSK Ltd., Maebashi-shi, Gunma 371-8527 (JP); KOIWAI, Hisayoshi; c/o NSK Ltd., Maebashi-shi, Gunma 371-8527 (JP)
(74) Representative: HOFFMANN EITLE
(86) International application number: PCT/JP2003/003341
(87) International publication number: WO 2003/084798

(57) **Abstract**

An apparatus for diagnosing the fault of a motor current sensing unit of a motor-driven power steering apparatus. Semiconductor switching devices (hereinafter referred to as devices) (T1 and T4) of an H bridge circuit constituting a motor drive circuit are turned OFF and the devices (T2) is turned ON, and the device (T3) is driven by a PWM signal based on a current command value during fault diagnosis. Simultaneously driving the devices (T3 and T2) makes a current supply to not a motor (M), but a current sensing resistor (R) to measure the current value by a current sensing circuit (C). The measured current value is compared with a predicted current value based on a current command value during a fault diagnosis. When the measured current value is outside the range of the predicted current value, the motor current sensing circuit is judged to be faulty.

## Description

### TECHNICAL FIELD

The present invention relates to a motor-driven power steering apparatus, and more particularly to a motor-driven power steering apparatus capable of sensing a fault of motor current sensing means thereof.

### BACKGROUND ART

A motor-driven power steering apparatus for vehicles senses steering torque to be generated on a steering shaft by operatingasteeringwheel, and vehicle speed to assist a steering force of the steering wheel by driving the motor on the basis of their sensed signals. Such a motor-driven power steering apparatus is controlled by an electronic control circuit, and an outline of the control is to operate a current command value, that is a control target value of a current to be supplied to the motor on the basis of steering torque sensed by a torque sensor and vehicle speed sensed by a vehicle speed sensor, and to control a current to be supplied to the motor on the basis of the operation result.

In other words, when the steering wheel is operated and the steering torque is generated, the electronic control circuit controls a current to be supplied to the motor in response to the steering force of the steering wheel and the vehicle speed in such a manner that if the vehicle speed sensed is zero or low speed, a great auxiliary steering force is supplied and if the vehicle speed sensed is high speed, a small auxiliary steering force is supplied, whereby an optimum auxiliary steering force for a driving state can be imparted.

In this type of apparatus, feedback control is performed in such a manner that a current that actually flows through the motor coincides with a control target value of a motor current that has been operated on the basis of the steering torque and the vehicle speed, and for this reason, there is provided motor current sensing means for sensing a current for flowing through the motor.

If the above-described motor current sensing means is out of order, it will not be possible to measure a correct motor current, and as a result, there will occur inconvenience that a current more than necessary flows through the motor to supply an excessive auxiliary steering force, or a necessary current cannot flow through the motor not to supply any sufficient auxiliary steering force.

Further, if the motor rotates when a current is caused to flow through the motor to confirm the motor current sensing means for operation, in a state in which the motor shaft has been coupled to a steering mechanism, the steering wheel may possibly rotate to cause an unexpected accident.

As correspondence to this problem, on the basis of a current value to be predicted when voltage is applied to the motor only for a time period sufficiently larger than an electric time constant of the motor and sufficiently smaller than a mechanical time constant of the motor, and a motor current value sensed by motor current sensing means, the present applicant has proposed fault judging means for judging a fault of the motor current sensing means, which has been opened to the public as Japanese Patent Laid-Open No.8-91239.

The fault judging means of the above-described motor current sensing means judges the fault by applying voltage to the motor only for a short time period immediately after engine starting in which an ignition key has turned ON, only for a time period sufficiently larger than an electric time constant of the motor and sufficiently smaller than a mechanical time constant of the motor. This is necessary because when the motor rotates immediately after the engine starts, the steering wheel suddenly rotates to cause an unexpected accident.

A motor-driven power steering apparatus which has conventionally been applied mainly to a small-sized vehicle is recently applied up to a large-sized vehicle, and when a tendency of a motor, toward higher output, for supplying an auxiliary steering force in order to cope with this, advances, in the application of voltage to the motor only for a time period sufficiently smaller than the mechanical time constant of the motor, it has become difficult to flowa sufficient motor current to be required for accurate diagnosis in initial diagnosis immediately after the engine starting.

Also, when the motor-driven power steering apparatus is applied to a large-sized vehicle, higher levels of control is demanded, and since a motor current sensing circuit of higher precision than before is used, even in fault diagnosis of the motor current sensing circuit, it has been demanded to perform diagnosis of higher precision.

In the conventional method for judging the fault of the motor current sensing means previously described, however, since in addition to variations in individual motor characteristics, that is, variations in motor internal resistance, variations in contact resistance between brush and commutator, variations in motor temperature and the like, variations in load and frictional resistance of a steering mechanism coupled to the motor and the like are also added and it is required that thresholds of fault judgment be set by giving margins, the conventional method has not been suitable for diagnosis of higher precision. An obj ect of thepresent invention is to solve the above-described problem.

### DISCLOSURE OF THE INVENTION

According to the present invention, there is provided a motor-driven power steering apparatus which operates a current command value for determining a value of a current to be supplied to a motor on the basis of at least a steering torque signal, and controls the output of the motor for imparting an auxiliary steering force to a steering mechanism on the basis of the current command value, comprising: first and second arms to be constructed of series-connected upper and lower switching devices; a H bridge circuit in which the motor is connected between a node between the upper and lower switching devices of the first arm and a node between the upper and lower switching devices of the second arm; a motor drive circuit for rotating the motor in forward and reverse directions by selectively bringing into conduction the upper and lower switching devices of the first and second arms on the basis of the current command value; motor current sensing means connected to the H bridge circuit in series for sensing the magnitude of a motor current; and fault judging means for judging the fault of the motor current sensing means.

Thus, when diagnosing the fault of the motor current sensing means, a current command value for fault diagnosis is set; the upper and lower switching devices of the first or second arm of the H bridge circuit are simultaneously driven to make a current supply to not the motor, but the motor current sensing means; and the motor current sensed value sensed by the fault judging means is compared with the current command value for fault diagnosis to diagnose the fault of the motor current sensing means.

When diagnosing the fault of the motor current sensing means, an operating condition is set such that one of the upper and lower switching devices of the first or second arm of the H bridge circuit operates within a non-saturation domain, and both will be simultaneously driven.

At this time, the switching devices are FETs, and the operating condition in which the operation is performed within the non-saturation domain will be set such that gate voltage of each FET is lower than during an usual operation.

Also, when diagnosing the fault of the motor current sensing means, the operating condition may be set such that one of the upper and lower switching devices of the first or second arm of the H bridge circuit operates in a state in which the switching loss is great, and both may be simultaneously driven.

At this time, the switching devices are FET, and the operating condition with great switching loss will be set by setting a driving frequency of gate voltage of FET to a frequency exceeding response speed of FET.

### BRIEF DESCRIPTION OF DRAWINGS

FIG. 1 is a block diagram explaining the operatingprinciple of a driving circuit of a motor for supplying an auxiliary steering force;
FIG. 2 is a block diagram explaining the operating principle of a driving circuit of a motor for supplying an auxiliary steering force;
FIG.3 is a view explaining DC characteristics of MOS-FET;
FIG.4 is a view explaining an outline of structure of a motor-driven power steering apparatus;
FIG. 5 is a block diagram showing an electronic control circuit;
FIG. 6 is a block diagram showing an example of structure of a motor drive circuit;
FIG. 7 is a flow chart explaining a fault diagnosis process of a current sensing circuit to be executed by the electronic control circuit when FET is driven in a mode of operation in non-saturation domain; and
FIG. 8 is a flow chart explaining a fault diagnosis process of a current sensing circuit to be executed by the electronic control circuit when FET is driven in a mode of operation of switching loss.

### BEST MODE FOR CARRYING OUT THE INVENTION

Hereinafter, the description will be made of an embodiment of the present invention. First, the description will be made of the principle of fault sensing of motor current sensing means according to the present invention.

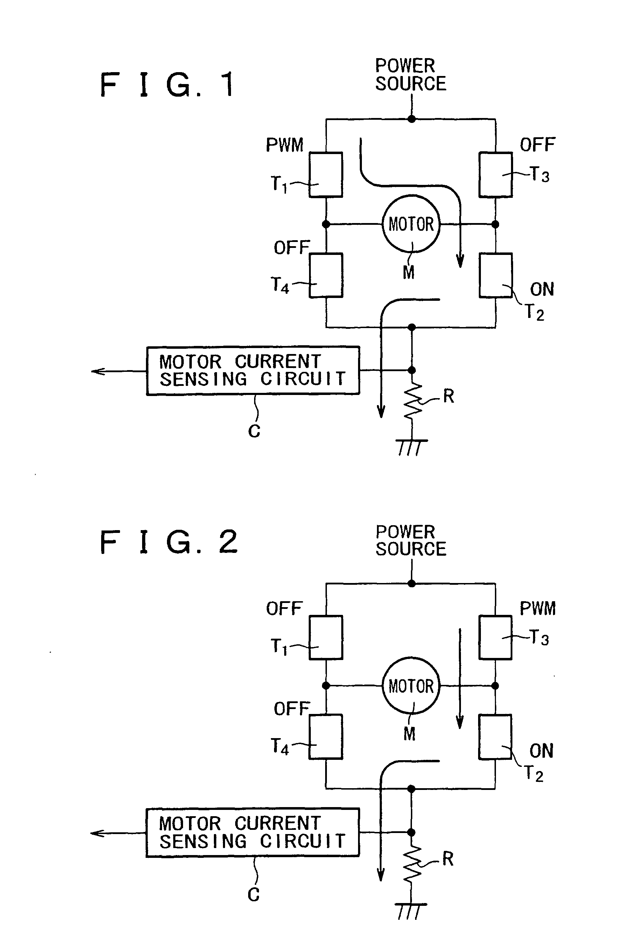

FIGS. 1 and 2 are block diagrams explaining the operating principle of a motor drive circuit for driving a motor M which supplies an auxiliary steering force. The motor drive circuit is a H bridge circuit comprising: a first arm in which semiconductor switching devices (hereinafter, referred to as devices merely) T1 and T4 are connected together in series in two steps up and down; a second arm in which the devices T3 and T2 are connected together in series in two steps up and down; and a motor M connected between a node between the devices T1 and T4, and a node between the devices T3 and T2, and one ends of the first and second arms are connected to a positive pole of a power source, while the other ends of the first and second arms are connected to the ground (negative pole of the power source) via a motor current sensing resistor R.

To the motor current sensing resistor R, there is connected a motor current sensing circuit C for sensing the motor current on the basis of a voltage drop at both ends thereof, the motor current sensing resistor R and the motor current sensing circuit C constitute motor current sensing means, and the motor current sensing means is connected to the H bridge circuit in series.

In the above-described structure, FIG. 1 shows usual motor driving, that is, a case where the motor M is driven at a duty ratio determined on the basis of the motor current command value. In this case, on the basis of signals of the sensed steering torque and the like, the motor current command value is operated, and on the basis of the operated motor current command value, the motor M is driven. When the motor M is rotated in a forward direction, the devices T3 and T4 are turned OFF, the device T2 is turned ON, and the device T1 is driven by a PWM signal (pulse width modulation signal) of the duty ratio determined on the basis of the motor current command value.

Voltage corresponding to the duty ratio is applied to the motor M; the motor current flows from the power source via the device T1, the motor M, the device T2 and the motor current sensing resistor R, and the motor M can be rotated in the forward direction. The voltage drop at both ends of the motor current sensing resistor R is sensed by the motor current sensing circuit C, whereby a motor current value i can be sensed.

In a case where the motor is rotated in a reverse direction (opposite direction to forward direction), when the devices T1 and T2 are turned OFF, the device T4 is turned ON, and the device T3 is driven by a PWM signal (pulse width modulation signal) of the duty ratio determined on the basis of the motor current command value, to the motor M, voltage corresponding to the duty ratio is applied, and the motor current flows from the power source via the device T3, the motor M, the device T4 and the motor current sensing resistor R, and the motor M can be rotated in the reverse direction. Even in this case, from the voltage drop at both ends of the motor current sensing resistor R, the motor current value i can be sensed.

Next, with reference to FIG.2, the description will be made of the fault sensing of the motor current sensing means according to the present invention. In the fault sensing according to the present invention, the devices T1 and T4 of the first arm of the H bridge circuit constituting the motor drive circuit are both turned OFF, the device T2 of the second arm is turned ON, the device T3 is driven by the PWM signal, and the devices T3 and T2 of the second arm are connected to the power source without through the motor M, in other words, those are simultaneously driven to flow a current through the motor current sensing resistor R to sense the fault of the motor current sensing means.

Contrary to this, it may be also possible to turn ON the device T4 of the first arm, to drive the device T1 by the PWM signal, to turn OFF the devices T3 and T2 of the second arm, and to drive the devices T1 and T4 of the first arm simultaneously.

According to this method, since it is possible to make a current supply to not the motor M, but the motor current sensing resistor R, it is possible to sense the fault of the current sensing means with high accuracy without introducing a restriction that the fault is sensed by flowing a slight current only for a short time period so as not to rotate the motor unlike the conventional technique previously described.

Usually, in a time period in which the devices T3 and T2 (or the devices T1 and T4 of the first arm) of the second arm of the H bridge circuit are simultaneously turned ON, for example, the device T2 is turned ON and the device T3 is driven by the PWM signal to turn ON, since the devices T3 and T2 of the second arm are connected to the power source without through the motor, which is a load, and enter a short-circuited state, an excessive current flows to destroy the devices T3 and T2.

When the first or second arm is simultaneously driven in the usual operation as described above, the devices will be destroyed. However, in order to avoid this and to drive the first or second arm simultaneously without destroying the devices, for example, the following two methods are conceivable. The first method is a method in which either device of two upper and lower devices T3 and T2 (or two upper and lower devices T1 and T4 of the first arm) of the second arm is kept operated within the non-saturation domain and the other device is driven by the PWM signal.

The second method is a method in which either device of two upper and lower devices T3 and T2 (or two upper and lower devices T1 and T4 of the first arm) of the second arm is driven by the PWM signal in a state in which the switching loss is great, and the other device is driven by the PWM signal in an usual state.

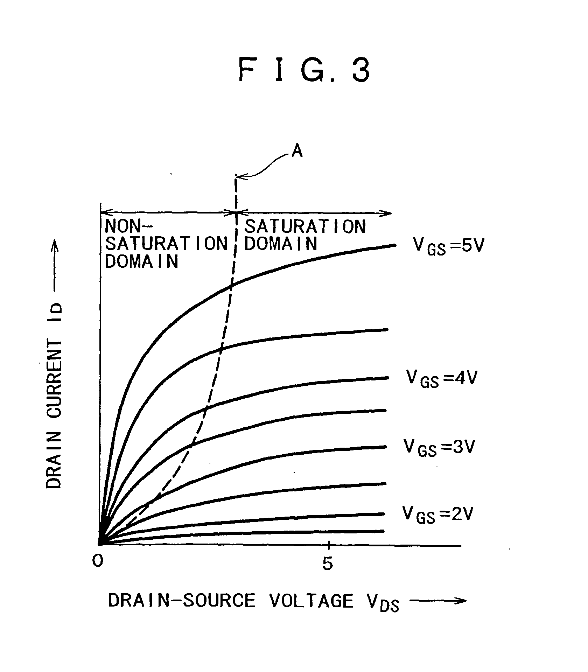

FIG. 3 is a view explaining DC characteristics of MOS-FET, and shows a state of change in drain current ID against drain-source voltage VDS when gate-source voltage VGS is changed, with the drain-source voltage VDS taken on the abscissa and the drain current ID taken on the ordinate. In FIG. 3, the left side of a line A is the non-saturation domain in which the drain current ID greatly changes against a change in the gate-source voltage VGS, and the right side is a saturation domain in which the drain current ID hardly changes against a change in the gate-source voltage VGS.

In order to operate the semiconductor switching device within the non-saturation domain, the gate voltage must be lowered. In the above-described H bridge circuit, since one ends of the first and second arms are connected to the positive pole of the power source and for the power source, generally a boasting power circuit or a bootstrap circuit is used, the output from such a boasting power circuit is made adjustable and by lowering the gate voltage of the device, it can be operated within the non-saturation domain.

Also, if when it is biased, for example, in a forward direction and a current flows, the voltage suddenly changes in a reverse direction, the semiconductor switching device such as FET has a response delay characteristic, which is called "turn-off time/turn-on time" or the like, such as a resistance value changing with a time lag to cut off the current, and during this timeperiod, there is a state in whicha usually-controllable current called "switching loss" does not flow.

In order to use the semiconductor switching device in a state in which the switching loss is great, a switching operation must be performed at speed exceeding the response speed of the semiconductor switching device. Although the semiconductor switching device has usually been driven at tens kHz, when driving at speed of 100 kHz or higher, it can be used in a state in which the switching loss is great.

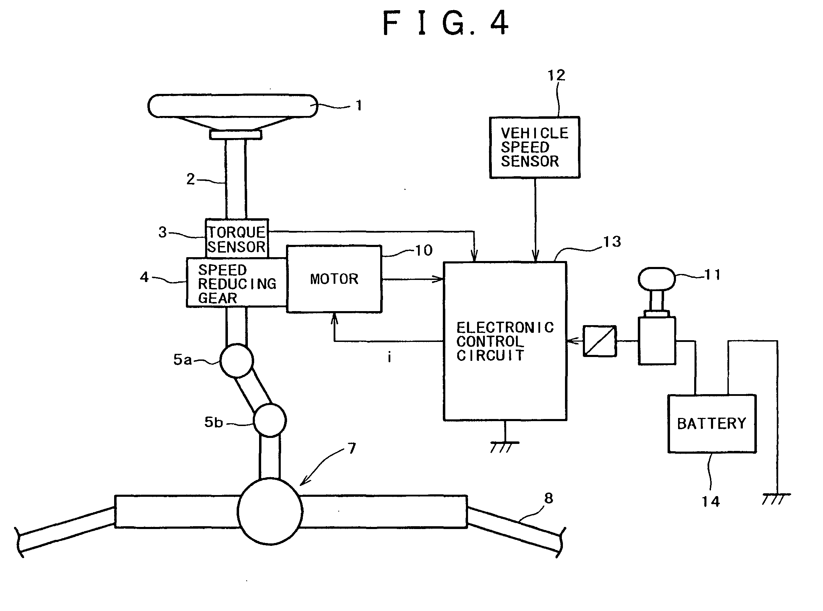

Next, the description will be made of the motor-driven power steering apparatus to which the present invention has been applied. FIG.4 is a view for explaining an outline of structure of the motor-driven power steering apparatus. The shaft 2 of a steering wheel 1 is coupled to a tie rod 8 of a steering wheel via a speed reducing gear 4, universal joints 5a, 5b, and a pinion-rack mechanism 7. On the shaft 2, there is provided a torque sensor 3 for sensing steering torque of the steering wheel 1, and a motor 10 for assisting the steering force is coupled to the shaft 2 via the speed reducing gear 4.

To an electronic control circuit 13 for controlling the power steering apparatus, electric power is supplied from a battery 14 via an ignition key 11. The electronic control circuit 13 operates a current command value on the basis of steering torque sensed by the torque sensor 3 and vehicle speed sensed by the vehicle speed sensor 12, and controls a current i to be supplied to the motor 10 on the basis of the current command value operated.

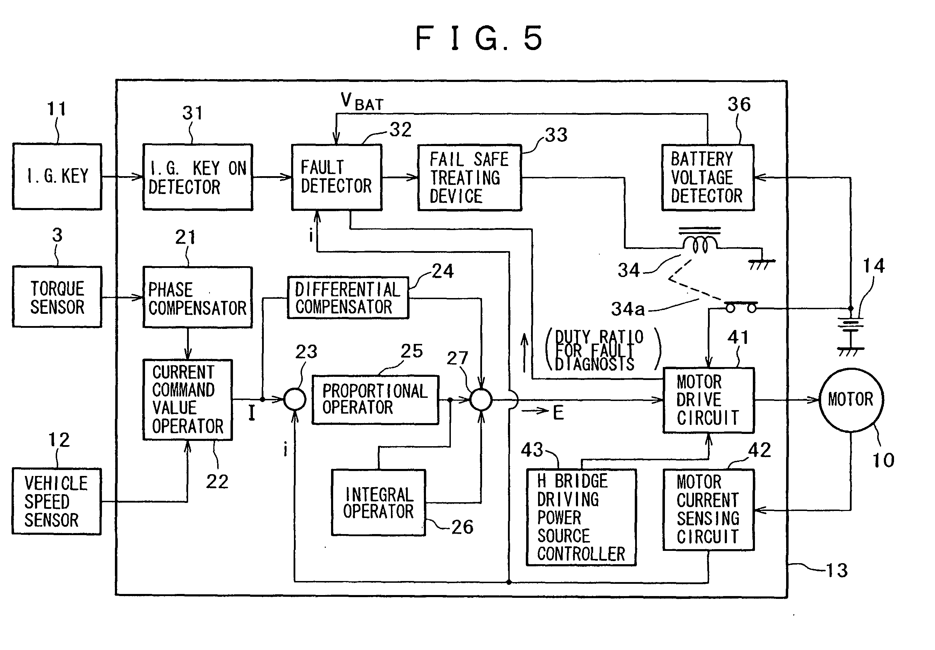

FIG.5 is a block diagram showing the electronic control circuit 13 for constituting the control means. In the present embodiment, the electronic control circuit 13 is mainly constructed of CPU, and in this case, shows a function to be executed by the program within the CPU. For example, a phase compensator 21 does not show a phase compensator 21 as independent hardware, but a phase compensating function to be executed by CPU. In this respect, it goes without saying that the electronic control circuit 13 is not constructed of CPU, but these functional elements can be constructed of respectively-independent hardware (electronic circuits).

Hereinafter, the description will be made of function and operation of the electronic control circuit 13. A steering torque signal inputted from the torque sensor 3 is phase-compensated in order to enhance stability of the steering system by the phase compensator 21, and is inputted into a current command value operator 22. Also, vehicle speed sensed by the vehicle speed sensor 12 is also inputted into the current command value operator 22.

The current command value operator 22 operates and determines a current command value I, which is a control target value of a current to be supplied to the motor 10, through the use of a predetermined operation expression on the basis of a torque signal and a vehicle speed signal inputted. A circuit constructed of a comparator 23, a differential compensator 24, a proportional operator 25 and an integral operator 26 is a circuit for performing feedback control such that an actual motor current value i coincides with the current command value I.

In the proportional operator 25, there is outputted a proportion value proportionate to a difference between the current command value I and the actual motor current value i. Further, an output signal from the proportional operator 25 is integrated in the integral operator 26 in order to improve the characteristic of the feedback system, and a proportion value of the integration value of the difference is outputted.

In the differential compensator 24, in order to increase response speed of the motor current value i which actually flows through the motor with respect to the current command value I operated by the current command value operator 22, a differentiation value of the current command value I is outputted.

The differentiation value of the current command value I outputted from the differential compensator 24, theproportion value proportionate to a difference between the current command value and the actual motor current value, outputted from the proportional operator 25, and an integration value outputted from the integral operator 26 are added and operated in an adder 27, and a current control value E (a value for determining a duty ratio of the PWM signal for determining the motor applied voltage), which is the operation result, is outputted to a motor drive circuit 41 as a motor drive signal.

Also, to the motor drive circuit 41, there is connected a H bridge driving power source controller 43 for switching voltage, for controlling, to supplied to the previously explained H bridge circuit between during fault diagnosis of the motor current sensing circuit 42 and during usual driving.

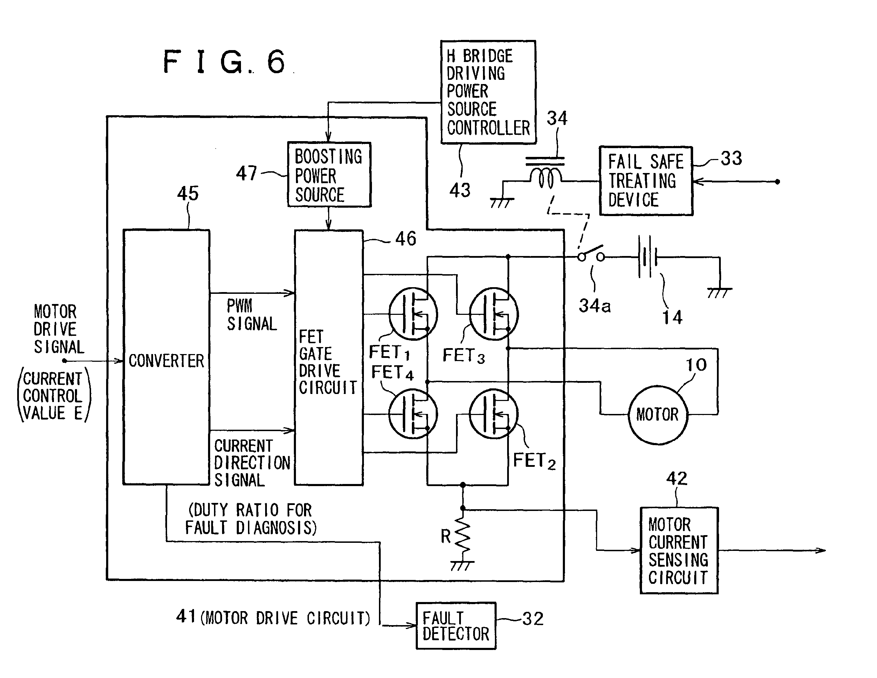

FIG.6 shows an example of structure of the motor drive circuit 41. The motor drive circuit 41 is composed of : a converter 45 for separating a current control value E inputted from the adder 27 into the PWM signal and a current direction signal for conversion; the H bridge circuit constructed of FET1 to FET4 (electric field effect transistor); a FET gate driving circuit 46 for open-close driving their gates; a boosting power source 47 for driving the high-tension side of FET1, FET3 of the H bridge circuit, and the like.

The boosting power source 47 is connected to the H bridge driving power source controller 43, and is controlled so as to switch voltage to supplied to the H bridge circuit between during fault diagnosis of the motor current sensing circuit 42 and during usual driving.

The PWM signal (pulse width modulation signal) is a signal for driving the gates of FET switching devices FET1 and FET3 of the H bridge circuit, and the duty ratio (time ratio for turning ON/OFF the gate of FET) of the PWM signal is determined by an absolute value of the current control value E operated by the adder 27.

A current direction signal is a signal for indicating a direction of a current to be supplied to the motor, and is a signal to be determined by code (positive and negative) of the current control value E operated by the adder 27.

FET1 and FET2 are switching devices, the gates of which are turned ON/OFF on the basis of the duty ratio of the PWM signal, for controlling the magnitude of the current flowing through the motor. Also, FET2 and FET4 are switching devices, the gates of which are turned ON/OFF on the basis of the current direction signal, for switching the direction of the current flowing through the motor, that is, the direction of rotation of the motor.

When usual driving is performed, if FET2 is in a conduction state, the current flows via FET1, the motor 10, FET2 and the resistor R, and a current directed in the positive direction flows through the motor 10. Also, if FET4 is in a conduction state, the current flows via FET3, the motor 10, FET4 and the resistor R, and a current directed in the negative direction flows through the motor 10.

The motor current sensing circuit 42 for constituting the motor current sensing means senses the magnitude of the current on the basis of voltage drop at both ends of the resistor R, and an actual motor current value thus sensed is fed back and inputted to the comparator 23 (See FIG.5).

The electronic control circuit described above is capable of imparting an optimum auxiliary steering force for the driving state because when the steering wheel is operated to generate steering torque, if the steering torque sensed is great and the vehicle speed sensed is zero or low speed, the current command value I is set to be great, and if the steering torque sensed is small and the vehicle speed sensed is fast, the current command value I is set to be small.

Next, the description will be made of fault diagnosing of the motor current sensing circuit 42 for constituting motor current sensing means according to the present invention, and a fail safe processing based on the sensing result.

When an ignition key 11 is turned ON, detection is performed by an I.G. key ON detector 31, its detection signal is inputted into a fault detector 32, and fault diagnosing is executed for a predetermined time period that has been set by a timer TM (not shown) in advance.

During fault diagnosis, a current commandvalue I for fault diagnosing that has been set in advance is outputted from the current command value operator 22. The duty ratio D of the PWM signal for driving FET of the H bridge circuit is determined on the basis of the current command value I for fault diagnosing. The H bridge driving power source controller 43 lowers the gate voltage by adjusting the output from the boosting power source 47, and FET3 of the second arm of the H bridge circuit is set so as to operate within the non-saturation domain. FET 2 of the second arm of the H bridge circuit is set to ON.

On driving FET3 by the PWM signal of the duty ratio D determined as for fault diagnosing, when FET3 and FET2 of the second arm of the H bridge circuit are both turned ON, the second arm enters a short-circuited state, and a circuit from the power source reaching the ground via FET3, FET2 and the resistor R is formed and a current flows. At this time, since FET3 operates within the non-saturation domain, it is not destroyed even if the second arm is in a short-circuited state.

Voltage to be developed at both ends of the resistor R is inputted into the motor current sensing circuit 42 to sense the current value. The current sensed value is inputted into the fault detector 32, in which the current predicted value operated in advance on the basis of the duty ratio D for fault diagnosing and the current sensed value are compared, and it is judged whether or not the current sensed value is within a specified range (within the error range) of the current predicted value.

As a result of the judgment, when the current sensed value is outside the specified range, it is judged that the motor current sensing circuit 42 is abnormal, a fail safe treating device 33 is caused to operate, a contact 34a is opened with a fail relay 34 OFF, and power feed to the motor 10 is cut off to cause the motor-driven power steering apparatus not to operate.

As a result of the judgment, when the current sensed value is within the specified range of the current predicted value, the motor current sensing circuit 42 judges it to be normal. Thus, the output from the boosting power source 47 is adjusted via the H bridge driving power source controller 43 for usual driving, that is, FET3 of the second arm of the H bridge circuit is set so as to operate within the saturation domain, and waiting a lapse of a predetermined time period for fault diagnosing, the fault diagnosing is completed to restore to a state of usual driving.

The above-described fault diagnosing of the motor current sensing circuit 42 has been performed by setting the FET3 of the second arm of the H bridge circuit so as to operate within the non-saturation domain and setting the FET2 to ON. However, even if FET1 of the first arm of the H bridge circuit is set so as to operate within the non-saturation domain and FET4 is set to ON for operation, the fault diagnosing can be performed in the quite same manner.

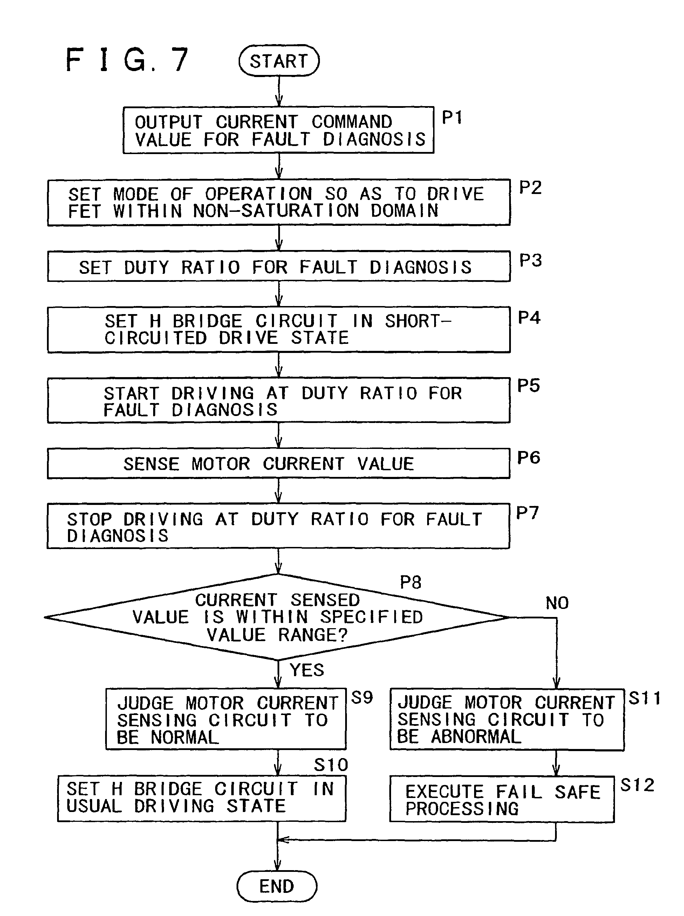

FIG.7 is a flow chart for explaining the fault diagnosing processing of the motor current sensing circuit 42 to be executed by CPU of the electronic control circuit 13 when FET1 at the upper step of the H bridge circuit is driven in the mode of operation in non-saturation domain. The same is also applicable when FET3 is driven in the mode of operation in non-saturation domain.

Hereinafter, the description will be made of a case where FET1 is used.

First, during fault diagnosis, the predetermined current command value I for fault diagnosis is outputted from the current command value operator 22 (Step P1). A mode of operation is set so as to drive FET3 of the second arm of the H bridge circuit within the non-saturation domain (Step P2), and the duty ratio D for fault diagnosing is set on the basis of the current command value I for fault diagnosing (Step P3).

FET2 of the second arm of the H bridge circuit is turned ON, and FET1 and FET4 of the first arm are turned OFF (Step P4).

On starting to drive FET3 by the PWM signal of the duty ratio D for fault diagnosis (Step P5), when FET3 turns ON and the second arm enters a short-circuited state, a current flows. Voltage to be developed at both ends of the resistor R is inputted into the motor current sensing circuit 42 to sense the current value (Step P6). The driving for fault diagnosing is stopped (Step P7), the current sensed value is compared with the current predicted value operated in advance, and it is judged whether or not the current sensed value is within the specified range (Step P8).

When the current sensed value is within the specified range in the judgment of Step P8, the motor current sensing circuit 42 is judged to be normal (Step P9), and the boosting power source 47 is set to a mode of usual driving (Step P10) to complete the processing. When the current sensed value is outside the specified range in the judgment of Step P8, the motor current sensing circuit 42 is judged to be abnormal (Step P11), and the fail safe processing is executed (Step P12) to complete the processing.

In the fault sensing of the motor current sensing means described above, FET of the H bridge circuit is driven in the mode of operation in the non-saturation domain to prevent from being destroyed even if the arm of the H-bridge circuit is in a short-circuited state, but inplace of this, it is alsopossible to drive FET of the H bridge circuit in a state in which the switching loss is great as described above and to prevent from being destroyed even if the arm of the H-bridge circuit is in a short-circuited state. In the following description, this mode of operation will be called "mode of operation of switching loss".

In this case, the PWM signal of the duty ratio D determined on the basis of the current command value I for fault diagnosis is outputted, and the frequency of the PWM signal is set to 100 kHz or higher. Thereby, FET1 (or FET3) at the upper step of the H bridge circuit can be driven in the mode of operation of switching loss, and it is not destroyed even if the arm of the H-bridge circuit is in a short-circuited state.

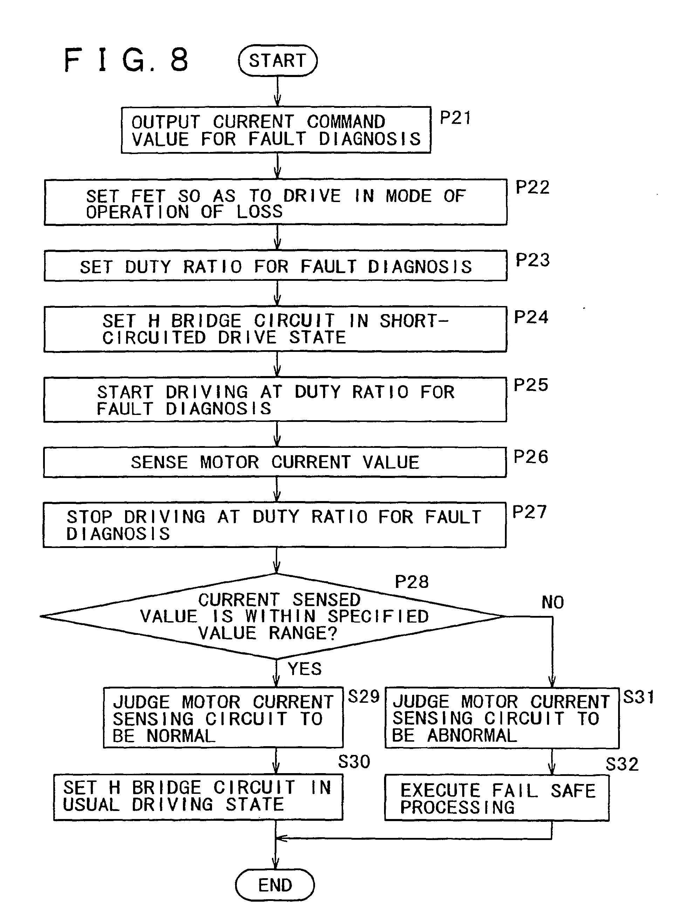

FIG. 8 is a flow chart explaining fault diagnosis processing of the motor current sensing circuit 42 to be executed by the CPU of the electronic control circuit 13 when FET1 at the upper step of the H bridge circuit is driven in the mode of operation of switching loss. The same is applicable to a case where FET3 is driven in the mode of operation of switching loss. Hereinaf ter, the description will be made of a case where FET1 is used.

First, during fault diagnosis, the current command value I for fault diagnosis that has been set in advance is outputted from the current command value operator 22 (Step P21). A mode of operation is set such that FET3 of the second arm of the H bridge circuit is driven in the mode of operation of switching loss (Step P22), and the duty ratio D determined for fault diagnosis is set (Step P23).

FET2 of the second arm of the H bridge circuit is turned ON, and FET1 and FET4 of the first arm are turned OFF (Step P24).

On starting to drive FET3 by the PWM signal of the duty ratio D determined for fault diagnosis (Step P25), FET3 turns ON, and the second arm enters a short-circuited state. Since at this time, a current flows, voltage to be developed at both ends of the resistor R is inputted into the motor current sensing circuit 42 to sense the current value (Step P26). The driving for fault diagnosis is stopped (Step P27), and the current sensed value is compared with a current predicted value operated in advance to judge whether or not the current sensed value is within the specified range (Step P28).

When the current sensed value is within the specif ied range in the judgment of Step P28, the motor current sensing circuit 42 is judged to be normal (Step P29), and the boosting power source 47 is set to a mode of usual driving (Step P30) to complete the processing. When the current sensed value is outside the specified range in the judgment of Step P28, the motor current sensing circuit 42 is judged to be abnormal (Step P31), and the fail safe processing is executed (Step P32) to complete the processing.

As described above, in the motor-driven power steering apparatus according to the present invention, in initial diagnosis immediately after the engine starting, any fault of the motor current sensing means is diagnosed. As the fault diagnosing means, by setting the semiconductor devices of the H bridge circuit constituting the motor drive circuit in a short-circuited state, a current necessary for the fault diagnosis is caused to flow through the motor current sensing means, making no current supply to the motor for diagnosing the fault of the motor current sensing means. Therefore, this is capable of diagnosing the fault of the motor current sensing means with higher accuracy than the conventional fault diagnosing method in which the fault is sensed by flowing, only for a short time period, such a degree of slight current that does not permit the rotation of the motor.

### INDUSTRIAL APPLICABILITY

As described above, the motor-driven power steering apparatus according to the present invention is useful as a fault diagnosing device for diagnosing the fault of a motor current sensing device incorporated in a control mechanism in an automotive power steering device.

## Claims

1. A motor-driven power steering apparatus which operates a current command value for determining a value of a current to be supplied to a motor on the basis of at least a steering torque signal, and controls output of the motor for imparting an auxiliary steering force to a steering mechanism on the basis of said current command value, comprising:
first and second arms constructed of series-connected upper and lower switching devices; a H bridge circuit in which the motor is connected between a node between the upper and lower switching devices of said first arm and a node between the upper and lower switching devices of said second arm; a motor drive circuit for rotating the motor in forward and reverse directions by selectively bringing into conduction the upper and lower switching devices of said first and second arms on the basis of said current command value;
motor current sensing means connected to said H bridge circuit in series for sensing the magnitude of a motor current; and
fault judging means for judging the fault of said motor current sensing means, **characterized in that**
when diagnosing the fault of said motor current sensing means, a current command value for fault diagnosis is set; the upper and lower switching devices of said first or second arm of said H bridge circuit are simultaneously driven to make a current supply to not the motor, but said motor current sensing means; and a motor current sensed value sensed by said fault judging means is compared with the current command value for fault diagnosis to diagnose the fault of said motor current sensing means.

2. The motor-driven power steering apparatus according to Claim 1, **characterized in that** when diagnosing the fault of said motor current sensing means, an operating condition is set such that at least one of the upper and lower switching devices of the first or second arm of said H bridge circuit operates within a non-saturation domain, whereby both are simultaneously driven to make a current supply to not the motor, but said motor current sensing means.

3. The motor-driven power steering apparatus according to Claim 2, **characterized in that** said switching devices are FET, and an operating condition in which the operation is performed within the non- saturation domain will be set such that gate voltage of the FET is lower than during an usual operation.

4. The motor-driven power steering apparatus according to Claim 1, **characterized in that** when diagnosing the fault of said motor current sensing means, an operating condition will be set such that one of the upper and lower switching devices of the first or second arm of said H bridge circuit operates in a state in which the switching loss is great to thereby forcefully set to a short-circuited state.

5. The motor-driven power steering apparatus according to Claim 4, **characterized in that** said switching device is FET, and an operating condition with great switching loss will be set by setting a driving frequency of gate voltage of FET to a frequency exceeding response speed of FET.
